# FASCICULE DE BREVET EUROPEEN

(11) **EP 4 493 979 B1**
(45) Date de publication et mention de la délivrance du brevet: **08.04.2026**
(21) Numéro de dépôt: 23726273.8
(22) Date de dépôt: 17.03.2023
(51) Int. Cl.: G03B 23/10, G03B 21/20, B60Q 1/32, F21S 41/683, F21S 43/14, F21S 43/20, H05B 45/32, F21W 102/40, F21W 103/60

(54) **DISPOSITIF DE PROJECTION D'IMAGES A LED SYNCHRONISEE**
BILDPROJEKTIONSVORRICHTUNG MIT SYNCHRONISIERTER LED
IMAGE PROJECTION DEVICE HAVING A SYNCHRONIZED LED

(30) Priorité: 18.03.2022 FR 2202401
(43) Date de publication de la demande: 22.01.2025
(73) Titulaire: VALEO VISION, 93012 Bobigny Cedex (FR)
(72) Inventeur: EL IDRISSI, Hafid, 93012 Bobigny Cedex (FR); TALEB, Rabih, 93012 Bobigny Cedex (FR)
(74) Mandataire: Valeo Visibility
(86) Numéro de dépôt international: PCT/EP2023/056875
(87) Numéro de publication internationale: WO 2023/175137

(56) Documents cités:
- WO-A1-2020/119775
- WO-A1-2021/228369
- WO-A2-2015/004440
- FR-A1- 3 063 198

## Description

### DOMAINE TECHNIQUE

Le domaine technique de l'invention est celui des dispositifs de projection d'images et plus particulièrement ceux équipant les véhicules automobiles et permettant la projection d'images sur le sol.

### ARRIERE-PLAN TECHNOLOGIQUE

Il existe aujourd'hui de tels dispositifs, parfois appelés « dynamic carpet projectors » en anglais (projecteurs au sol modulables), permettant de projeter des images au sol lors de l'ouverture ou du déverrouillage d'une portière, ou à l'approche de celle-ci, quand le conducteur approche une clé ou un badge d'ouverture du véhicule.

Un tel dispositif utilise par exemple un disque sur lequel sont placées des images. Ce dispositif comprend une source de lumière, généralement une LED, qui produit un faisceau lumineux d'éclairage, mis en forme par une lentille d'illumination ou de collimation placée en aval de la source, entre la source et le disque. Pour projeter telle ou telle image du disque, un moteur électrique actionne le disque pour le faire tourner, de manière à amener l'image à projeter sur le trajet du faisceau lumineux d'éclairage (en pratique, en face de la lentille d'illumination). Le dispositif comprend aussi un système optique de projection, situé en vis-à-vis de la source, de l'autre côté du disque. Ce système comprend au moins une lentille, et permet de projeter au sol l'image qui a été placée dans le faisceau lumineux. Un exemple d'un tel dispositif est donné dans le document WO 2021/228369 A1.

Dans un tel dispositif, la LED (selon l'acronyme anglo-saxon de « Light Emitting Diode », c'est-à-dire diode électroluminescente ou DEL) est généralement alimentée par un courant électrique qui varie au cours du temps, avec une variation en créneau.

Il est souhaitable que cette variation en créneau respecte certains critères. Il est souhaitable notamment que sa fréquence de variation soit assez élevée, par exemple de l'ordre d'une cinquantaine de Hz ou plus, pour éviter qu'un scintillement ou une fluctuation de luminosité ne soit perçu par un individu. En effet, d'un point de vue électrique, le temps de réponse d'une LED est généralement très court si bien que la LED cesse d'émettre de la lumière dès qu'elle n'est plus alimentée électriquement, entre deux impulsions en créneau. Si la fréquence du signal en créneau est faible, cette extinction répétée de la LED peut être perçue par un individu, du fait de la persistance rétinienne limitée de l'œil humain, et donner lieu à une impression visuelle de scintillement indésirable.

Il est souhaitable aussi, en général, d'employer un rapport cyclique modéré, pour, entre deux impulsions en créneau, laisser un lapse de temps suffisant pour pouvoir passer d'une image à l'autre (en faisant tourner le disque) *pendant que la LED est éteinte.* Cela permet de passer d'une image à l'autre sans bavure ou chevauchement entre images, ni masquage de parties d'image.

Le rapport cyclique est alors choisi de manière à satisfaire un compromis entre : d'une part, une extinction assez longue entre deux impulsions, pour permettre un changement d'image, et d'autre part, une extinction pas trop longue, pour qu'elle ne soit pas perceptible à l'œil, afin d'éviter une sensation de scintillement des images projetées. Ce compromis amène le plus souvent à un rapport cyclique assez faible, de l'ordre de 10 à 20 % par exemple.

Ce type de dispositif de projection permet d'améliorer la visibilité de la zone d'accès au véhicule, de créer des effets visuels dans son voisinage, ou encore de communiquer des informations à un utilisateur du véhicule d'une manière facilement appréhendable, lorsqu'il s'approche du véhicule. Les dispositifs de projection connus sont généralement satisfaisants en termes d'encombrement, robustesse et de rendu visuel des images projetées.

Néanmoins, dans un effort continu de réduction de consommation énergétique, notamment pour les véhicules, il est souhaitable de diminuer l'énergie électrique consommée par un tel dispositif de projection, tout en maintenant ses performances en termes d'affichage, c'est-à-dire en termes de rendu visuel.

### RESUME

Dans ce contexte, la présente technologie concerne un dispositif de projection d'images comprenant :
- au moins une LED, qui émet un faisceau lumineux d'éclairage lorsqu'elle est alimentée par un courant électrique,
- un module de changement d'image comprenant différentes images à projeter montées ou gravées sur un élément mobile couplé à un actionneur électromécanique, configuré pour placer sur le trajet du faisceau lumineux d'éclairage, sélectivement, sur commande, l'une ou l'autre des images à projeter, et
- un circuit électrique de commande, connecté à la LED et à l'actionneur du module de changement d'image, le circuit électrique de commande étant configuré de sorte que :
   - dans un mode d'affichage d'image : l'image présente sur le trajet du faisceau d'éclairage est maintenue en position et le courant électrique qui alimente la LED varie au cours du temps avec un premier rapport cyclique et un premier courant crête, et
   - dans un mode de changement d'image : le courant électrique qui alimente la LED varie au cours du temps avec un deuxième rapport cyclique inférieur au premier rapport cyclique, et avec un deuxième courant crête supérieur au premier courant crête, et l'actionneur met en mouvement l'élément mobile pour remplacer l'image présente sur le trajet du faisceau par une autre desdites images.

Dans le mode de changement d'image, la LED est donc alimentée avec le deuxième rapport cyclique, qui est faible (plus faible que le premier rapport cyclique). L'intervalle de temps pendant lequel la LED est éteinte est alors important, ce qui permet de changer d'image pendant que la LED est éteinte. Pour maintenir une luminosité moyenne comparable (voire identique) pour l'utilisateur, le courant électrique crête est en revanche plus élevé que dans le mode d'affichage d'image.

Au contraire, dans le mode d'affichage d'image, la LED est alimentée avec le premier rapport cyclique, élevé (ce qui n'est pas gênant en termes de changement d'image, puisque, dans ce mode, on ne change pas l'image à projeter). Augmenter ainsi le rapport cyclique permet alors, pour une même luminosité moyenne, de réduire d'autant le courant électrique crête (le premier courant crête est d'ailleurs inférieur au deuxième courant crête, employé en mode de changement d'image).

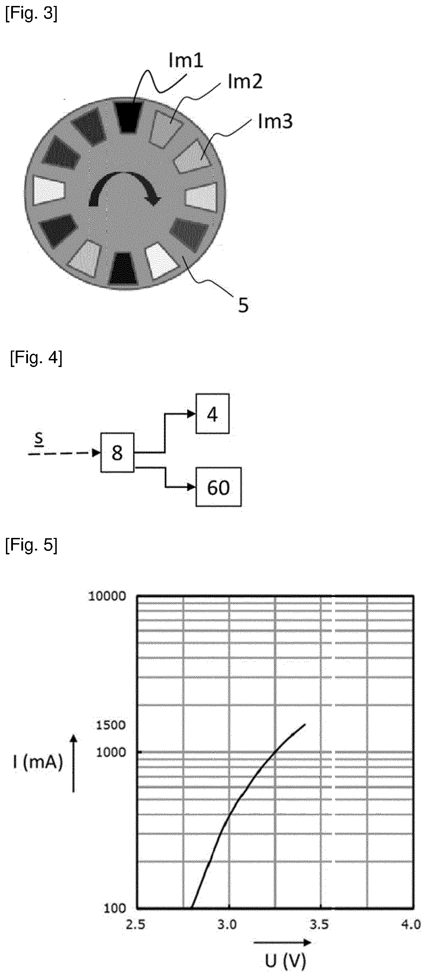

*Or le rendement énergétique d'une LED est meilleur lorsque le courant crête est plus bas.* En effet, comme illustré sur la figure 5 (qui représente une caractéristique courant-tension de LED typique), une augmentation du courant électrique d'alimentation I s'accompagne d'une augmentation de la tension d'alimentation U (du fait de la résistance interne non nulle de la LED), et donc d'une augmentation de la puissance électrique consommée. Ainsi, à titre d'exemple, avec un rapport cyclique R1 de 90% et un courant crête 11, la puissance électrique moyenne consommée sera P1=0,9×I1×U(11). Tandis qu'avec un rapport cyclique R2 de 10 % et un courant crête I2=9×I1, la puissance lumineuse moyenne produite sera la même (où quasiment la même), tandis que la puissance électrique moyenne consommée sera P2=0,1×I2×U(I2)=0,9×I1×U(9×I1), qui est donc nettement supérieure à P1, puisque U augmente avec I, pour la LED (cette baisse de rendement, lorsqu'on augmente le courant crête s'explique par les pertes dans la résistance interne, non nulle, de la LED).

Il est donc particulièrement intéressant de commander la LED avec des rapports cycliques différents en mode d'affichage d'image, et en mode de changement d'image, car cela permet :
- en mode de changement d'image, de disposer d'un temps d'extinction suffisant pour changer d'image,
- tout en commandant la LED avec un rapport cyclique élevé et un courant crête faible, et donc avec un rendement énergétique élevé le reste du temps.

Par rapport à un dispositif dans lequel la LED serait commandée tout le temps avec le même rapport cyclique, le présent dispositif permet donc de réduire la consommation énergétique tout en conservant les mêmes caractéristiques en termes d'affichage et de rendu visuel.

Outre les caractéristiques mentionnées ci-dessus, dispositif qui vient d'être présenté peut présenter une ou plusieurs des caractéristiques optionnelles suivantes, considérées individuellement ou selon toutes les combinaisons techniquement envisageables :
- le produit du premier rapport cyclique par le premier courant crête est égal au produit du deuxième rapport cyclique par le deuxième courant crête, à mieux que 20% ou même 10% près ;
- dans le mode de changement d'image : le courant électrique a une variation en créneau, le courant étant égal audit deuxième courant crête pendant un intervalle d'alimentation et étant sensiblement nul pendant un intervalle d'extinction, et dans lequel l'actionneur est commandé de manière à remplacer l'image présente sur le trajet du faisceau pendant ledit intervalle d'extinction ;
- le circuit électrique de commande est configuré, pour lors d'un basculement entre le mode d'affichage d'image et le mode de changement d'image, commander au dispositif de fonctionner selon un mode de transition, au cours duquel le courant électrique a une variation temporelle en créneau, avec un rapport cyclique, intermédiaire, compris entre le premier rapport cyclique et le deuxième rapport cyclique, et avec un courant crête, intermédiaire, compris entre le premier courant crête et le deuxième courant crête ;
- dans le mode de transition, le courant électrique varie en créneau en présentant plusieurs créneaux successifs dont le rapport cyclique varie graduellement et de manière monotone, d'un créneau à l'autre, et dont le courant crête varie graduellement et de manière monotone, d'un créneau à l'autre ;
- Si la transition considérée est une transition depuis le mode d'affichage d'image vers le mode de changement d'image, alors, la variation graduelle et monotone du rapport cyclique est une décroissance graduelle, d'un créneau à l'autre, du premier rapport cyclique vers le deuxième rapport cyclique (tandis que le courant crête augment graduellement) ; Au contraire, si la transition considérée est une transition depuis le mode de changement d'image vers le mode d'affichage d'image, alors, la variation graduelle et monotone du rapport cyclique est une croissance graduelle, d'un créneau à l'autre, du deuxième rapport cyclique vers le premier rapport cyclique (tandis que le courant crête diminue graduellement) ;
- dans le mode de transition, le produit du rapport cyclique par l'intensité crête est constant, d'un créneau à l'autre, à mieux que 20% ou même 10% près ; ce produit est par exemple égal au produit du premier rapport cyclique par le premier courant crête ;
- dans le mode de changement d'image, le courant électrique varie en créneau, en présentant un seul créneau avant de basculer du mode de changement d'image au mode d'affichage d'image, ou du mode de changement d'image au mode de transition ;
- le dispositif de projection comprend en outre un système optique de projection 21 agencé pour projeter au sol, depuis un véhicule automobile, l'image placée sur le trajet du faisceau lumineux ;
- le circuit électrique de commande est configuré pour :
   - recevoir un signal d'ouverture ou déverrouillage d'un ouvrant du véhicule, et pour
   - en réponse audit signal, commander un basculement du mode d'affichage d'image au mode de changement d'image.

La présente technologie concerne également un procédé de commande d'un dispositif de projection d'images, le dispositif comprenant :
- au moins une LED, qui émet un faisceau lumineux d'éclairage lorsqu'elle est alimentée par un courant électrique,
- un module de changement d'image comprenant différentes images à projeter montées ou gravées sur un élément mobile couplé à un actionneur électromécanique, configuré pour placer sur le trajet du faisceau lumineux d'éclairage, sélectivement, sur commande, l'une ou l'autre des images à projeter, et
- un circuit électrique de commande, connecté à la LED et à l'actionneur du module de changement d'image,
- procédé au cours duquel :
   - dans un mode d'affichage d'image : l'image présente sur le trajet du faisceau d'éclairage est maintenue en position et le courant électrique qui alimente la LED varie au cours du temps avec un premier rapport cyclique et un premier courant crête, et
   - dans un mode de changement d'image : le courant électrique qui alimente la LED varie au cours du temps avec un deuxième rapport cyclique inférieur au premier rapport cyclique, et avec un deuxième courant crête supérieur au premier courant crête, et l'actionneur met en mouvement l'élément mobile pour remplacer l'image présente sur le trajet du faisceau par une autre desdites images.

Les caractéristiques optionnelles présentées ci-dessus en termes de dispositif peuvent aussi s'appliquer au procédé qui vient d'être décrit.

La présente technologie et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif.
[Fig. 1] représente schématiquement un véhicule équipé d'un dispositif de projection d'image mettant en œuvre la présente technologie, vu de côté.
[Fig. 2] représente schématiquement le dispositif de projection d'image, vu en perspective.
[Fig. 3] représente schématiquement un disque du dispositif de la figure 2.
[Fig. 4] représente des éléments du dispositif de la figure 2, sous forme de blocs fonctionnels.
[Fig. 5] représente schématiquement une caractéristique courant-tension d'une LED du dispositif de la figure 2.
[Fig. 6] représente schématiquement des points de fonctionnement du dispositif, dans un plan fréquence-rapport cyclique.
[Fig. 7] représente schématiquement l'évolution au cours du temps d'un courant électrique alimentant la LED.

### DESCRIPTION DETAILLEE

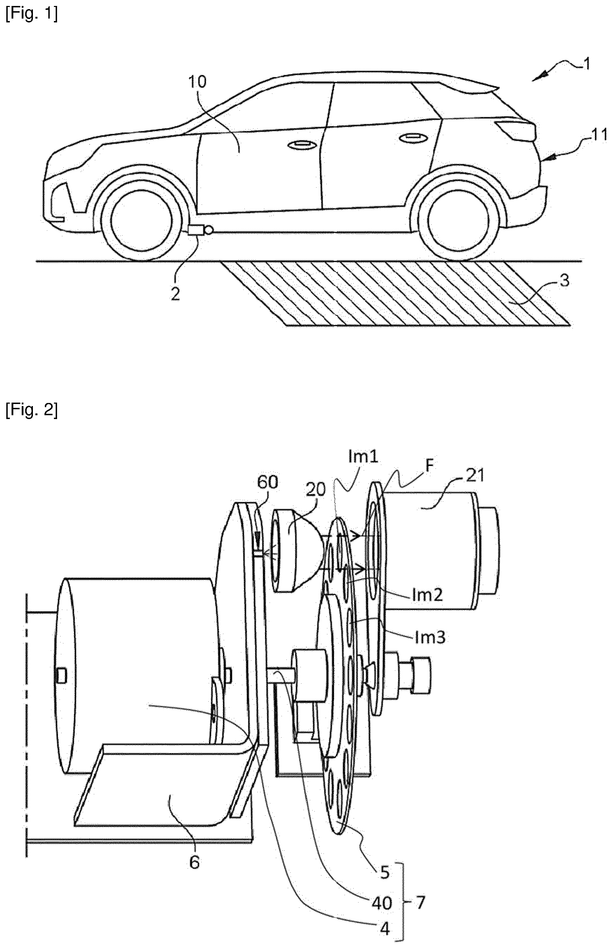

La figure 1 représente un véhicule automobile 1 équipé d'un dispositif de projection d'image, 2, permettant la projection d'une image 3 sur le sol. Comme on le verra plus bas, le dispositif 2 peut être commandé par l'ouverture d'une porte 10 avant ou arrière, ou un autre ouvrant tel que le coffre 11.

Le dispositif 2 est placé en bas de caisse, par exemple juste sous le véhicule où la hauteur est limitée et l'environnement agressif (projections d'eau, risque de choc avec des éléments sur a route, etc...). Il est donc protégé par un boitier, de taille limitée (puisque le dispositif est de 20cm à 30cm du sol), par exemple de 4 à 10 cm de côté.

Le dispositif 2 de projection d'images comprend au moins une LED 60 (éventuellement plusieurs) qui sert de source lumineuse. Cette LED émet un faisceau lumineux d'éclairage, F, lorsqu'elle est alimentée par un courant électrique, I. Le dispositif 2 comprend aussi une lentille d'illumination 20 (plus généralement, un système optique comprenant au moins une lentille), servant de condenseur. Cette lentille permet de mettre en forme le faisceau lumineux émis par la LED, en particulier en le rendant moins divergent. La lentille d'illumination 20 est placée en aval de la LED 60, entre la LED et l'image à projeter (Im1, sur la figure 2). Le dispositif 2 comprend aussi un système optique de projection 21 agencé pour projeter au sol, depuis le véhicule automobile 1, l'image à projeter. Le système optique de projection 21 est situé sur le trajet du faisceau lumineux F, en aval de l'image à projeter. Ici, il est situé en vis-à-vis de la LED 60, de l'autre côté d'un disque 5 qui porte l'image à projeter. Le système optique de projection 21 comprend une ou plusieurs lentilles ou miroirs. Il forme sur le sol une image 3 de l'image à projeter Im1, avec un grandissement très important, et, en général, un effet de dilatation. En effet, l'image 3 formée au sol a au moins 0,5 m de côté, et peut même occuper une zone de 1m de long par 1 m de large ou plus, et le sol est éclairée de manière rasante par le dispositif de projection.

Le dispositif 2 de projection comprend aussi un module de changement d'image 7, qui comprend différentes images Im1, Im2, Im3,... à projeter, montées ou gravées sur un élément mobile, ici un disque 5. Le disque 5 est couplé à un actionneur électro-mécanique, ici un moteur 4 électrique, par un arbre 40. On notera que d'un élément mobile différent d'un disque pourrait être employé pour supporter et déplacer les images, en variante. Quoiqu'il en soit, le module de changement d'image 7 est configuré pour placer sur le trajet du faisceau lumineux F d'éclairage, sélectivement (c'est-à-dire une image à la fois), sur commande, l'une ou l'autre des images à projeter. Pour cela, le moteur 4, typiquement un moteur pas à pas, fait tourner le disque 5 pour amener l'image à projeter au sol dans le faisceau lumineux F, en face du système optique de projection 21.

Les images Im1, Im2, Im3,... du module de changement sont formées chacune sur un support d'image, par exemple en verre, essentiellement transparent (c'est-à-dire laissant passer la majeure partie de la puissance lumineuse incidente). Ces images peuvent être gravées (éventuellement par laser), collées ou encore lithographiées sur les supports d'images en question. Les images Im1, Im2, Im3,... sont réparties en cercle sur le disque 5 (figure 3), ici en périphérie du disque, sur toute sa circonférence, par exemple avec un écart angulaire constant entre images.

Le dispositif 2 de projection comprend aussi un circuit électrique de commande 8, connecté à la LED 60 et au moteur 4 (figure 4). Le circuit électrique de commande 8 peut être réalisé en tout ou en partie sur un circuit imprimé 6 situé dans le boitier du dispositif de projection (et sur lequel est soudée la LED 60). Il comprend par exemple :
- une source de courant commandable, reliée à la LED 60 pour l'alimenter électriquement,
- un étage amplificateur, de type driver, pour commander le moteur 4 (à moins que ce driver ne soit inclus dans le moteur), et
- un module de commande, par exemple de type circuit programmable, pour piloter la source de courant de la LED et le driver du moteur.

Le module de commande comprend également des moyens de réception, par exemple une interface de communication, filaire ou sans fil, pour recevoir un signal s, provenant d'une autre unité électronique du véhicule, le circuit électronique de commande 8 étant configuré pour commander la LED et le moteur en fonction du signal s reçu (comme expliqué en détail plus loin). En variante ou en complément, les moyens de réception du circuit électronique de commande pourraient être configurés pour recevoir directement ce signal d'un dispositif de commande à distance du véhicule, tel qu'un téléphone portable ou une clef « plip ».

Le circuit électrique de commande 8 est configuré pour commander la LED 60 et le moteur 4 de manière synchronisée, en particulier, pour commander au moteur un changement d'image pendant un laps de temps durant lequel la LED est maintenue éteinte.

De manière remarquable, le circuit électrique de commande 8 est configuré pour commander au dispositif de projection de fonctionner alternativement, selon :
- un mode d'affichage d'image, dans lequel l'image présente sur le trajet du faisceau d'éclairage est maintenue en position, et
- un mode de changement d'image,
- la LED 60 étant alimentée avec des rapports cycliques différents, dans le mode d'affichage d'image, et dans le mode de changement d'image.

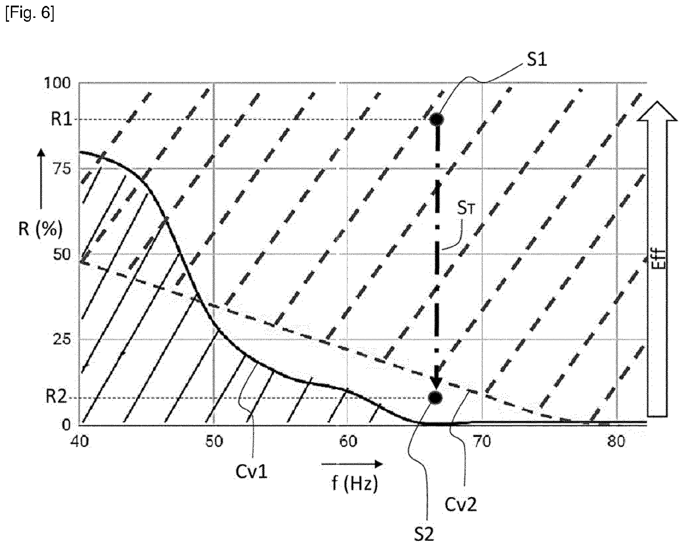

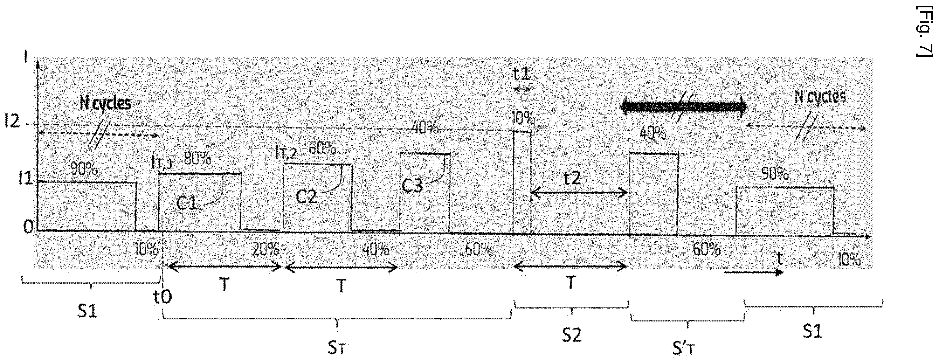

En l'occurrence, dans le mode d'affichage d'image, qui correspond aux phases S1, sur les figures 6 et 7, le courant électrique I qui alimente la LED 60 varie au cours du temps t avec un premier rapport cyclique R1 et un premier courant crête I1. Tandis que dans le mode de changement d'image (phase S2, sur la figure 7), le courant électrique I qui alimente la LED varie au cours du temps avec un deuxième rapport cyclique R2 inférieur au premier rapport cyclique R1 (par exemple inférieur à 0,8×R1, ou même inférieur à 0,5×R1), et avec un deuxième courant crête I2 supérieur au premier courant crête I1 R1 (par exemple supérieur à 1,25×I1, ou même supérieur à 2×I1). Et c'est dans le mode de changement d'image que le moteur 4 met en mouvement le disque 5 pour remplacer l'image (Im1 par exemple) présente sur le trajet du faisceau lumineux F, par une autre des images du disque (Im2 par exemple).

Comme expliqué plus en détail dans la partie « résumé », cette disposition permet :
- en mode de changement d'image, de disposer d'un temps d'extinction de la LED suffisamment long pour changer d'image sans que cela ne soit perceptible visuellement (grâce à un rapport cyclique réduit),
- tout en commandant la LED avec un rapport cyclique R1 élevé et un courant crête I1 faible, et donc avec un rendement énergétique Eff élevé en mode d'affichage d'image.

Le courant électrique I qui alimente la LED 60 a une variation en créneau, ici. C'est-à-dire qu'il varie en présentant alternativement :
- pendant un intervalle temporel d'alimentation (par exemple l'intervalle t1, sur la figure 7), une intensité constante, appelée courant crête, puis
- pendant un intervalle d'extinction (par exemple, l'intervalle t2, sur la figure 7), une intensité nulle ou sensiblement nulle (c'est-à-dire inférieure à un dixième du courant crête, voire moins),
- puis, à nouveau, une intensité constante, puis nulle, et ainsi de suite.

Le rapport cyclique de cette variation en créneau, noté R, est égal à la durée de l'intervalle d'alimentation (t1), divisé par la somme de la durée de l'intervalle d'alimentation (t1) et de la durée de l'intervalle d'extinction (t2). Ainsi, lorsque R=10%, la LED est allumée pendant seulement 10% de la période temporelle T du signal en créneau (elle est alors allumée 9 fois moins longtemps que ce qu'elle est éteinte, au cours de cette période).

En variante, le courant électrique pourrait avoir une variation qui ne soit pas exactement en créneau (par exemple avec une légère variation d'intensité pendant l'intervalle d'alimentation), mais avec néanmoins, comme précédemment :
- un intervalle temporel d'alimentation, pendant lequel le courant à une intensité non négligeable, par exemple supérieure à chaque instant à 1/10 de l'intensité maximale du courant (appelé à nouveau courant crête) ; puis
- un intervalle temporel d'extinction, pendant lequel le courant a une intensité nulle ou tout au moins sensiblement nulle (inférieure à 1/10 du courant crête, voire moins) ;
- puis à nouveau un intervalle d'alimentation, puis un intervalle d'extinction, et ainsi de suite...

Dans ce cas, le rapport cyclique reste défini comme indiqué plus haut (durée de l'intervalle d'alimentation t1, divisé par la somme de la durée de l'intervalle d'alimentation t1 et de la durée de l'intervalle d'extinction t2).

La figure 6 montre, dans le plan fréquence - rapport cyclique, des points de fonctionnement correspondant respectivement au mode d'affichage d'image (S1) et au mode de changement d'image (S2). Sur ce graphique, la fréquence f de variation du courant électrique (fréquence du signal en créneau) est représentée en abscisse, tandis que le rapport cyclique R, exprimé en %, est représenté en ordonnée.

Sur la figure 6, la courbe Cv1 montre la limite au-dessus de laquelle il est souhaitable de travailler, pour éviter qu'un individu ne perçoive un scintillement ou une fluctuation d'intensité lumineuse de l'image 3 formée sur le sol. Cette courbe illustre qu'il est souhaitable que la fréquence f soit assez élevée et/ou que le rapport cyclique R soit assez élevé pour éviter un tel scintillement (en effet, une fréquence ou un rapport cyclique élevé conduit à un temps d'extinction court, non perceptible, entre deux créneaux de courant). La zone hachurée située sous la courbe Cv1 correspond ainsi à une zone à éviter, dans le plan f - R.

La courbe Cv2 montre quant à elle la limite en dessous de laquelle il est souhaitable de travailler pour disposer d'un temps suffisant pour changer d'image pendant l'intervalle d'extinction de la LED, entre deux créneaux de courant. Cette courbe illustre qu'il est souhaitable que la fréquence f soit assez faible et/ou que le rapport cyclique R soit assez faible, pour disposer d'un temps d'extinction suffisamment long pour pouvoir changer d'image pendant que la LED est éteinte. La zone en hachures pointillées, située au-dessus de la courbe Cv2, correspond ainsi à une zone à éviter, en tout cas lorsqu'il est prévu de changer d'image.

Dans les dispositifs de projection de l'art antérieur, le même rapport cyclique, constant, est employé en continu. Il est alors choisi dans la zone non hachurée, située entre ces deux courbes, pour satisfaire aux deux critères mentionnés ci-dessus. Cela conduit à employer en permanence un rapport cyclique assez faible (typiquement de l'ordre de 10 à 20%), qui est peu favorable du point de vue du rendement énergétique Eff de la LED.

Ici, au contraire, la LED est alimentée :
- avec le deuxième rapport cyclique R2, qui correspond à un point de fonctionnement situé dans la zone non hachurée (et qui est donc compatible avec le temps de réponse mécanique du module de changement d'image), lorsque le dispositif fonctionne en mode de changement d'image (phase S2),
- et avec le premier rapport cyclique R1, plus élevé, et donc plus favorable en termes de rendement énergétique (et qui correspond en revanche à un point de fonctionnement situé hors de la zone non-hachurée) en mode d'affichage d'image, lorsque l'image projetée est maintenue fixe.

La figure 7 représenté l'évolution temporelle du courant électrique I qui alimente la LED, pour une séquence au cours de laquelle le dispositif fonctionne en mode d'affichage (phase S1), puis en mode de changement d'image (phase S2), pour changer l'image projetée, et, entre les deux, dans un mode de transition (phase S_{T}), avec une diminution graduelle du rapport cyclique depuis le premier rapport cyclique R1 vers le deuxième rapport cyclique R2.

Comme déjà indiqué, dans le mode d'affichage d'image (phase S1), le courant électrique I varie en créneau, avec le premier rapport cyclique R1, qui est assez élevé, typiquement supérieur à 30% et même à 60%. Dans l'exemple représenté, R1 vaut 90%. La fréquence f des créneaux est par exemple comprise entre 50 et 150 Hz. Cette première phase S1 peut, comme ici, comprendre un nombre élevé N de périodes (i.e. : de créneaux ; en effet, avec un tel système de projection, la même image est souvent projetée assez longtemps par exemple pendant 1 seconde ou même quelques secondes, avant qu'il n'y ait un changement d'image).

Un basculement, vers un fonctionnement en mode de changement d'image, est ensuite déclenché, à l'instant tₒ, par exemple suite à la réception d'un signal s d'ouverture d'ouvrant 10, 11 par le circuit électrique de commande 8.

Ce basculement est effectué de manière progressive, en passant par un fonctionnement dans le mode de transition (phase S_{T}), pendant lequel le rapport cyclique diminue graduellement, d'un créneau C1, C2, C3 à l'autre, pour passer progressivement du premier rapport cyclique R1 au deuxième rapport cyclique R2. Conjointement, le courant crête (I_{T,1}, I_{T,2} par exemple) augmente graduellement, d'un créneau à l'autre, pour passer du premier courant crête I1 au deuxième courant crête I2.

Cette variation graduelle des paramètres d'alimentation de la LED, et donc des paramètres d'éclairage de l'image projetée, permet de rendre le passage, du mode d'affichage au mode de changement d'image, aussi indétectable que possible pour un utilisateur d'un point de vue visuel.

Le circuit électrique de commande peut être configuré pour maintenir un fonctionnement dans le mode de transition pendant au moins deux, voire au moins quatre périodes T de la variation en créneau du courant électrique. Dans le mode de transition, le courant électrique varie alors en créneau, en présentant au moins deux, voire au moins quatre créneaux successifs, ce qui permet une variation assez graduelle des paramètres d'affichage. Dans l'exemple représenté, dans le mode de transition, le courant I présente trois créneaux successifs C1, C2, C3. Le nombre total de créneau peut par exemple être compris entre 3 et 20, ce qui permet une variation graduelle, et, en même temps, un passage assez rapide au mode de changement d'image, pour changer l'image. A titre d'exemple, pour une fréquence f de 66 Hz (soit T=15ms), avec trois créneaux C1, C2, C3 de transition, et un créneau pour le changement d'image en lui-même (pendant la phase S2), il faut en tout 60 ms environ entre la réception du signal de commande d'ouverture d'ouvrant, et le remplacement, effectif, d'une image par une autre image (plus adaptée au contexte d'ouverture de porte). Ce temps de réaction global du dispositif est court, et conduit à une perception de quasi-instantanéité, pour l'utilisateur du véhicule. Une durée totale du fonctionnement en mode de transition plus longue, par exemple de 0,1 s ou même 0,3 s (mais de préférence inférieure à 0,3 s) resterait d'ailleurs adaptée, en termes de temps de réaction du dispositif.

Dans le mode de transition, les valeurs successives du rapport cyclique, correspondant aux créneaux de courant électrique successifs C1, C2, C3 peuvent par exemple être équiréparties, entre le premier rapport cyclique R1 et le deuxième rapport cyclique R2. Dans ce cas, si R1=90% et R2=10%, à titre d'exemple, et si le courant présente exactement trois créneaux successifs, dans le mode de transition (avant passage au mode de changement d'image), les trois valeurs successives de rapport cyclique, pour ces trois créneaux, seront 30%, 50%, et enfin 70%. De la même manière, les valeurs successives du courant crête, correspondant aux créneaux de courant électrique successifs du mode transition, peuvent par exemple être équiréparties, entre le premier courant crête I1 et le deuxième courant crête I2. D'autres répartition (non-équirépartition) sont néanmoins possibles.

Après le fonctionnement en mode de transition (phase S_{T}), le dispositif d'affichage passe immédiatement au fonctionnement en mode de changement d'image (phase S2). Dans ce mode, le courant électrique I présente ici un seul créneau, et le fonctionnement rebascule ensuite immédiatement vers le mode d'affichage d'image, avec, à nouveau, une phase de transition S'_{T} entre les deux. Cette phase de transition correspondant à nouveau à fonctionnement dans le mode de transition.

Dans le mode de changement d'image, le courant électrique présente un créneau de courant, pendant l'intervalle temporel d'alimentation t1, puis un courant nul ou quasi-nul pendant l'intervalle d'extinction t2 déjà mentionné. Pendant l'intervalle d'extinction, le circuit électrique de commande 8 commande au moteur 4 de faire tourner le disque 5 pour remplacer l'image présente sur le faisceau lumineux d'éclairage par une autre image du disque.

La durée de l'intervalle d'extinction t2 est au moins égale à un temps de remplacement d'image du module de changement d'image 7. Ce temps de remplacement d'image, qui est une sorte de temps de réponse mécanique de ce module, est égal (voire éventuellement légèrement supérieur) à la durée nécessaire pour que le moteur fasse tourner le disque depuis une première position angulaire, dans laquelle l'une des images Im1, Im2, Im3, ... est dans le faisceau lumineux F, jusqu'à une deuxième position angulaire dans laquelle une autre de ces images est située, en entier, dans le faisceaux lumineux (avec immobilisation dans cette deuxième position angulaire).

Pendant la deuxième phase de transition S'_{T}, le courant électrique varie en créneau, et le rapport cyclique du courant augmente graduellement, d'un créneau à l'autre, pour passer progressivement du deuxième rapport cyclique R2 au premier rapport cyclique R1. Conjointement, le courant crête diminue graduellement, d'un créneau à l'autre, pour repasser du deuxième courant crête I2 au premier courant crête I1. Là aussi le nombre de créneaux est supérieur ou égal à 2, et peut être compris par exemple entre 3 et 20. Ici, la phase de transition S'_{T} est symétrique de la phase de transition S_{T} (symétrique par rapport au temps t). Autrement formulé, ces deux phases sont identiques, ici, si ce n'est que l'une correspond à une diminution progressive du rapport cyclique, tandis que l'autre correspond à une re-augmentation progressive du rapport cyclique.

Le circuit électrique de commande 8 est configuré pour que, dans ces différents modes de fonctionnement, et donc au cours des différentes phases de fonctionnement S1, S_{T}, S2, S'_{T}, S1 qui ont été présentées : le produit du rapport cyclique par le courant crête soit constant (d'un créneau à l'autre), au moins à 20%, voire à 10% près. Cela permet de maintenir une luminosité apparente (luminosité moyenne - perçue par l'œil humain) constante, ou tout au moins sensiblement constante au cours de ces différentes phases. Il est donc prévu ci, notamment, que I1×R1=I2×R2 (à au moins 20%, ou même 10% près). Et aussi que I_{T,1}×R_{T,1}= I_{T,2}×R_{T,2}= I1×R1, entre autres.

Le basculement du mode d'affichage, statique, vers le mode de changement d'image pourrait être déclenché suite à la réception, directement par le circuit électrique de commande, d'un signal de commande d'ouverture d'ouvrant émis par un dispositif de commande à distance du véhicule avec émetteur, tel qu'un téléphone portable ou une clef « plip ».

Ici, le basculement du mode d'affichage vers le mode de changement d'image (et donc le déclenchement de la séquence S_{T}, puis S2, puis S'_{T}, puis S1) est toutefois déclenché par la réception, par le circuit électrique de commande 8, d'un signal s, transmis par une autre unité électrique du véhicule 1 (par exemple grâce à un réseau CAN ou équivalent), cette autre unité étant en charge de la commande centralisée des ouvrants, ou de la commande de sortie de veille du véhicule, par exemple. En l'occurrence, le signal s reçu par le circuit électrique de commande 8, et en fonction duquel un changement d'image projetée est déclenché, est un signal d'ouverture d'ouvrant 10, 11 du véhicule. Ce signal s peut être produit suite à la réception, par l'unité électronique en question, d'une commande d'ouverture provenant d'une clef plip ou équivalent. Le signal s peut être émis par l'unité électronique en question (chargée de l'ouverture centralisée) lorsqu'elle détecte qu'un utilisateur autorisé est à proximité du véhicule, car exemple en détectant la proximité d'un badge d'identification de l'utilisateur du véhicule (éventuellement un badge électrique passif), ou d'un badge d'ouverture du véhicule, d'un téléphone portable autorisé, ou d'un autre dispositif électronique identifiable.

Comme il ressort de la description ci-dessus, le circuit électrique de commande 8 du dispositif de projection est configuré pour commander ce dispositif 2 conformément à un procédé de commande au cours duquel :
- dans le mode d'affichage d'image : l'image (Im1 par exemple) présente sur le trajet du faisceau d'éclairage est maintenue en position et le courant électrique I qui alimente la LED 60 varie au cours du temps t avec le premier rapport cyclique R1 et le premier courant crête 11, et
- dans le mode de changement d'image : le courant électrique I qui alimente la LED varie au cours du temps avec le deuxième rapport cyclique R2 inférieur au premier rapport cyclique R1, et avec le deuxième courant crête I2 supérieur au premier courant crête I1, et l'actionneur 4 du module de changement d'image 7 met en mouvement l'élément mobile 5 pour remplacer l'image présente sur le trajet du faisceau par une autre desdites images (par exemple Im2).

Ce procédé comprend ici les étapes suivantes :
- fonctionnement dans le mode d'affichage d'image, puis, en réponse à la réception du signal s d'ouverture d'ouvrant par le circuit électrique de commande 8,
- fonctionnement dans le mode de transition, puis (une fois la transition réalisée)
- fonctionnement dans le mode de changement d'image, avec remplacement de l'image projetée par une autre, puis
- à nouveau, fonctionnement dans le mode de transition, pour revenir progressivement au mode d'affichage, puis
- reprise du fonctionnement dans le mode d'affichage.

## Revendications

1. Dispositif (2) de projection d'images comprenant :
- au moins une LED (60), qui émet un faisceau lumineux (F) d'éclairage lorsqu'elle est alimentée par un courant électrique (I),
- un module de changement d'image (7) comprenant différentes images (Im1, Im2, Im3) à projeter montées ou gravées sur un élément mobile (5) couplé à un actionneur (4) électromécanique, configuré pour placer sur le trajet du faisceau lumineux (F) d'éclairage, sélectivement, sur commande, l'une (Im1) ou l'autre (Im2) des images à projeter, et
- un circuit électrique de commande (8), connecté à la LED et à l'actionneur (4) du module de changement d'image,
le dispositif étant **caractérisé en ce que** le circuit électrique de commande (8) est configuré de sorte que :
- dans un mode d'affichage d'image (S1) : l'image (Im1) présente sur le trajet du faisceau d'éclairage est maintenue en position et le courant électrique (I) qui alimente la LED (60) varie au cours du temps (t) avec un premier rapport cyclique (R1) et un premier courant crête (11), et
- dans un mode de changement d'image (S2) : le courant électrique (I) qui alimente la LED varie au cours du temps avec un deuxième rapport cyclique (R2) inférieur au premier rapport cyclique (R1), et avec un deuxième courant crête (I2) supérieur au premier courant crête (11), et l'actionneur (4) met en mouvement l'élément mobile (5) pour remplacer l'image (Im1) présente sur le trajet du faisceau par une autre desdites images (Im2, Im3).

2. Dispositif (2) selon la revendication 1, dans lequel le produit du premier rapport cyclique (R1) par le premier courant crête (11) est égal au produit du deuxième rapport cyclique (R2) par le deuxième courant crête (I2), à mieux que 20% ou même 10% près.

3. Dispositif (2) selon l'une des revendications précédentes, dans lequel, dans le mode de changement d'image : le courant électrique (I) a une variation en créneau, le courant étant égal audit deuxième courant crête (I2) pendant un intervalle d'alimentation (t1) et étant sensiblement nul pendant un intervalle d'extinction (t2), et dans lequel l'actionneur (4) est commandé de manière à remplacer l'image présente sur le trajet du faisceau pendant ledit intervalle d'extinction (t2).

4. Dispositif (2) selon l'une des revendications précédentes, dans le lequel le circuit électrique de commande (8) est configuré, pour lors d'un basculement entre le mode d'affichage d'image (S1) et le mode de changement d'image (S2), commander au dispositif de fonctionner selon un mode de transition (S_{T}, S'_{T}), au cours duquel le courant électrique (I) a une variation temporelle en créneau, avec un rapport cyclique, intermédiaire, compris entre le premier rapport cyclique (R1) et le deuxième rapport cyclique (R2), et avec un courant crête, intermédiaire, compris entre le premier courant crête (11) et le deuxième courant crête (I2).

5. Dispositif (2) selon la revendication précédente, dans le lequel, dans le mode de transition (S_{T}, S'_{T}), le courant électrique (I) varie en créneau en présentant plusieurs créneaux successifs (C1, C2, C3) dont le rapport cyclique (R) varie graduellement et de manière monotone, d'un créneau à l'autre, et dont le courant crête (I_{T,1}, I_{T,2}) varie graduellement et de manière monotone, d'un créneau à l'autre.

6. Dispositif (2) selon la revendication 4 ou 5, dans lequel, dans le mode de transition (S_{T}, S'_{T}), le produit du rapport cyclique par l'intensité crête est constant, d'un créneau à l'autre, à mieux que 20% ou même 10% près.

7. Dispositif (2) selon l'une des revendications précédentes, comprenant en outre un système optique de projection (21) agencé pour projeter au sol, depuis un véhicule automobile (1), l'image (Im1) placée sur le trajet du faisceau lumineux (F).

8. Dispositif (2) selon la revendication précédente, dans lequel le circuit électrique de commande (8) est configuré pour :
- recevoir un signal (s) d'ouverture ou déverrouillage d'un ouvrant (10, 11) du véhicule (1), et pour
- en réponse audit signal, commander un basculement du mode d'affichage d'image (S1) au mode de changement d'image (S2).

9. Procédé de commande d'un dispositif (2) de projection d'images, le dispositif comprenant :
- au moins une LED (60), qui émet un faisceau lumineux (F) d'éclairage lorsqu'elle est alimentée par un courant électrique (I),
- un module de changement d'image (7) comprenant différentes images (Im1, Im2, Im3) à projeter montées ou gravées sur un élément mobile (5) couplé à un actionneur (4) électromécanique, configuré pour placer sur le trajet du faisceau lumineux (F) d'éclairage, sélectivement, sur commande, l'une ou l'autre des images à projeter, et
- un circuit électrique de commande (8), connecté à la LED (60) et à l'actionneur (4) du module de changement d'image,
**caractérisé en ce que**, au cours du procédé :
- dans un mode d'affichage d'image (S1) : l'image (Im1) présente sur le trajet du faisceau d'éclairage est maintenue en position et le courant électrique (I) qui alimente la LED (60) varie au cours du temps (t) avec un premier rapport cyclique (R1) et un premier courant crête (11), et
- dans un mode de changement d'image (S2): le courant électrique (I) qui alimente la LED varie au cours du temps avec un deuxième rapport cyclique (R2) inférieur au premier rapport cyclique (R1), et avec un deuxième courant crête (I2) supérieur au premier courant crête (11), et l'actionneur (4) met en mouvement l'élément mobile (5) pour remplacer l'image (Im1) présente sur le trajet du faisceau par une autre desdites images (Im2, Im3).

## Patentansprüche

1. Bildprojektionsvorrichtung (2), umfassend:
- mindestens eine LED (60), die einen Lichtstrahl (F) zur Beleuchtung aussendet, wenn sie mit elektrischem Strom (I) versorgt wird,
- ein Bildwechselmodul (7), das verschiedene zu projizierende Bilder (Im1, Im2, Im3) umfasst, die auf einem beweglichen Element (5) montiert oder eingraviert sind, das mit einem elektromechanischen Aktuator (4) gekoppelt ist, der konfiguriert ist, um selektiv auf Befehl eines (Im1) oder ein anderes (Im2) der zu projizierenden Bilder auf den Weg des Beleuchtungslichtstrahls (F) zu platzieren, und
- eine elektrische Steuerschaltung (8), die mit der LED und dem Aktuator (4) des Bildwechselmoduls verbunden ist,
wobei die Vorrichtung **dadurch gekennzeichnet ist, dass** die elektrische Steuerschaltung (8) so konfiguriert ist, dass:
- in einem Bildanzeigemodus (S1): das auf dem Weg des Beleuchtungsstrahls befindliche Bild (Im1) in Position gehalten wird und der elektrische Strom (I), der die LED (60) versorgt, im Laufe der Zeit (t) mit einem ersten Tastverhältnis (R1) und einem ersten Spitzenstrom (11) variiert, und
- in einem Bildwechselmodus (S2): der elektrische Strom (I), der die LED versorgt, im Laufe der Zeit mit einem zweiten Tastverhältnis (R2), das kleiner als das erste Tastverhältnis (R1) ist, und mit einem zweiten Spitzenstrom (12), der größer als der erste Spitzenstrom (11) ist, variiert, und der Aktuator (4) das bewegliche Element (5) in Bewegung setzt, um das auf dem Strahlweg befindliche Bild (Im1) durch ein anderes der genannten Bilder (Im2, Im3) zu ersetzen.

2. Vorrichtung (2) nach Anspruch 1, wobei das Produkt aus dem ersten Tastverhältnis (R1) und dem ersten Spitzenstrom (11) gleich dem Produkt aus dem zweiten Tastverhältnis (R2) und dem zweiten Spitzenstrom (12) ist, mit einer Genauigkeit von besser als 20% oder sogar 10%.

3. Vorrichtung (2) nach einem der vorhergehenden Ansprüche, wobei im Bildwechselmodus: der elektrische Strom (I) eine rechteckförmige Variation aufweist, wobei der Strom während eines Versorgungsintervalls (t1) gleich dem zweiten Spitzenstrom (12) ist und während eines Ausschaltintervalls (t2) im Wesentlichen null ist, und wobei der Aktuator (4) so gesteuert wird, dass er das auf dem Strahlweg befindliche Bild während des Ausschaltintervalls (t2) ersetzt.

4. Vorrichtung (2) nach einem der vorhergehenden Ansprüche, wobei die elektrische Steuerschaltung (8) konfiguriert ist, um bei einem Wechsel zwischen dem Bildanzeigemodus (S1) und dem Bildwechselmodus (S2) die Vorrichtung anzuweisen, gemäß einem Übergangsmodus (ST, S'T) zu arbeiten, während dessen der elektrische Strom (I) eine zeitliche rechteckförmige Variation mit einem Tastverhältnis, das zwischen dem ersten Tastverhältnis (R1) und dem zweiten Tastverhältnis (R2) liegt, und mit einem Spitzenstrom, der zwischen dem ersten Spitzenstrom (11) und dem zweiten Spitzenstrom (12) liegt, aufweist.

5. Vorrichtung (2) nach dem vorhergehenden Anspruch, wobei im Übergangsmodus (ST, S't) der elektrische Strom (I) rechteckförmig variiert und mehrere aufeinanderfolgende Rechtecke (C1, C2, C3) aufweist, deren Tastverhältnis (R) von einem Rechteck zum anderen schrittweise und monoton variiert, und deren Spitzenstrom (IT,1, IT,2) von einem Rechteck zum anderen schrittweise und monoton variiert.

6. Vorrichtung (2) nach Anspruch 4 oder 5, wobei im Übergangsmodus (ST, S'T) das Produkt aus Tastverhältnis und Spitzenintensität von einem Rechteck zum anderen konstant ist, mit einer Genauigkeit von besser als 20% oder sogar 10%.

7. Vorrichtung (2) nach einem der vorhergehenden Ansprüche, ferner umfassend ein optisches Projektionssystem (21), das angeordnet ist, um das auf dem Weg des Lichtstrahls (F) platzierte Bild (Im1) von einem Kraftfahrzeug (1) aus auf den Boden zu projizieren.

8. Vorrichtung (2) nach dem vorhergehenden Anspruch, wobei die elektrische Steuerschaltung (8) konfiguriert ist, um:
- ein Signal (s) zum Öffnen oder Entriegeln einer Öffnung (10, 11) des Fahrzeugs (1) zu empfangen, und um
- als Reaktion auf das Signal einen Wechsel vom Bildanzeigemodus (S1) zum Bildwechselmodus (S2) zu steuern.

9. Verfahren zur Steuerung einer Bildprojektionsvorrichtung (2), wobei die Vorrichtung umfasst:
- mindestens eine LED (60), die einen Lichtstrahl (F) zur Beleuchtung aussendet, wenn sie mit elektrischem Strom (I) versorgt wird,
- ein Bildwechselmodul (7), das verschiedene zu projizierende Bilder (Im1, Im2, Im3) umfasst, die auf einem beweglichen Element (5) montiert oder eingraviert sind, das mit einem elektromechanischen Aktuator (4) gekoppelt ist, der konfiguriert ist, um selektiv auf Befehl eines oder ein anderes der zu projizierenden Bilder auf den Weg des Beleuchtungslichtstrahls (F) zu platzieren, und
- eine elektrische Steuerschaltung (8), die mit der LED (60) und dem Aktuator (4) des Bildwechselmoduls verbunden ist,
**dadurch gekennzeichnet, dass** während des Verfahrens:
- in einem Bildanzeigemodus (S1): das auf dem Weg des Beleuchtungsstrahls befindliche Bild (Im1) in Position gehalten wird und der elektrische Strom (I), der die LED (60) versorgt, im Laufe der Zeit (t) mit einem ersten Tastverhältnis (R1) und einem ersten Spitzenstrom (11) variiert, und
- in einem Bildwechselmodus (S2): der elektrische Strom (I), der die LED versorgt, im Laufe der Zeit mit einem zweiten Tastverhältnis (R2), das kleiner als das erste Tastverhältnis (R1) ist, und mit einem zweiten Spitzenstrom (12), der größer als der erste Spitzenstrom (11) ist, variiert, und der Aktuator (4) das bewegliche Element (5) in Bewegung setzt, um das auf dem Strahlweg befindliche Bild (Im1) durch ein anderes der genannten Bilder (Im2, Im3) zu ersetzen.

## Claims

1. An image projection device (2) comprising:
- at least one LED (60), which emits an illumination light beam (F) when it is powered by an electric current (I),
- an image substitution module (7) comprising various images (Im1, Im2, Im3) to be projected that are mounted or etched on a movable element (5) coupled to an electromechanical actuator (4), configured to selectively place one (Im1) or the other (Im2) of the images to be projected on the path of the illumination light beam (F) on command; and
- an electrical control circuit (8), connected to the LED and to the actuator (4) of the image substitution module,
the device being **characterized in that** the electrical control circuit (8) is configured so that:
- in an image display mode (S1): the image (Im1) present on the path of the illumination light beam is held in position and the electric current (I) that powers the LED (60) varies over time (t) with a first duty cycle (R1) and a first peak current (11); and
- in an image substitution mode (S2): the electric current (I) that powers the LED varies over time with a second duty cycle (R2) lower than the first duty cycle (R1), and with a second peak current (I2) higher than the first peak current (11), and the actuator (4) moves the movable element (5) in order to replace the image (Im1) present on the path of the beam with another one of said images (Im2, Im3).

2. The device (2) as claimed in claim 1, wherein the product of the first duty cycle (R1) and the first peak current (11) is equal to the product of the second duty cycle (R2) and the second peak current (I2), to within 20 % or even 10 %.

3. The device (2) as claimed in any of the preceding claims, wherein, in the image substitution mode: the electric current (I) exhibits a square wave variation, with the current being equal to said second peak current (I2) during a power supply interval (t1) and being substantially zero during a turning-off interval (t2), and in which the actuator (4) is controlled so as to replace the image present on the path of the beam during said turning-off interval (t2).

4. The device (2) as claimed in any of the preceding claims, wherein the electrical control circuit (8) is configured to control the device to operate according to a transition mode (S_{T}, S'_{T}) when switching between the image display mode (S1) and the image substitution mode (S2), during which transition mode the electric current (I) exhibits a square wave time variation, with an intermediate duty cycle ranging between the first duty cycle (R1) and the second duty cycle (R2), and with an intermediate peak current ranging between the first peak current (11) and the second peak current (I2).

5. The device (2) as claimed in the preceding claim, wherein, in the transition mode (S_{T}, S'_{T}), the electric current (I) exhibits a square wave variation by having several successive square waves (C1, C2, C3) whose duty cycle (R) varies gradually and monotonously from one square wave to another and whose peak current (I_{T,1}, I_{T,2}) varies gradually and monotonously from one square wave to another.

6. The device (2) as claimed in claim 4 or 5, wherein, in the transition mode (S_{T}, S'_{T}), the product of the duty cycle and the peak intensity is constant from one square wave to another, to within 20 % or even 10 %.

7. The device (2) as claimed in any of the preceding claims, further comprising an optical projection system (21) arranged so that the image (Im1) placed on the path of the illumination light beam (F) is projected onto the ground from a motor vehicle (1).

8. The device (2) as claimed in the preceding claim, wherein the electrical control circuit (8) is configured for:
- receiving a signal (s) for opening or unlocking a door (10, 11) of the vehicle (1); and for
- controlling, in response to said signal, a switch from the image display mode (S1) to the image substitution mode (S2).

9. A method for controlling an image projection device (2), the device comprising:
- at least one LED (60), which emits an illumination light beam (F) when it is powered by an electric current (I),
- an image substitution module (7) comprising various images (Im1, Im2, Im3) to be projected that are mounted or etched on a movable element (5) coupled to an electromechanical actuator (4), configured to selectively place one or the other of the images to be projected on the path of the illumination light beam (F) on command; and
- an electrical control circuit (8), connected to the LED (60) and to the actuator (4) of the image substitution module,
**characterized in that**, during the method:
- in an image display mode (S1): the image (Im1) present on the path of the illumination light beam is held in position and the electric current (I) that powers the LED (60) varies over time (t) with a first duty cycle (R1) and a first peak current (I1); and
- in an image substitution mode (S2): the electric current (I) that powers the LED varies over time with a second duty cycle (R2) lower than the first duty cycle (R1), and with a second peak current (I2) higher than the first peak current (11), and the actuator (4) moves the movable element (5) in order to replace the image (Im1) present on the path of the beam with another one of said images (Im2, Im3).
